(19) **Europäisches Patentamt / European Patent Office / Office européen des brevets**

(11) **EP 4 318 366 B1**

(12) **EUROPEAN PATENT SPECIFICATION**

(45) Date of publication and mention
of the grant of the patent:
**25.03.2026  Bulletin 2026/13**

(21) Application number: **22779780.0**

(22) Date of filing: **02.03.2022**

(51) International Patent Classification (IPC):
**G06Q 50/06** *(2024.01)*       **B60L 53/66** *(2019.01)*
**G06Q 30/04** *(2012.01)*       **G06Q 30/06** *(2023.01)*

(52) Cooperative Patent Classification (CPC):
**B60L 53/65; G06Q 30/04; G06Q 30/06;**
**G06Q 50/06; G07F 7/08; G16Y 10/40; G16Y 20/30;**
B60L 53/66; B60L 53/665; B60L 53/68;
B60L 2240/72; B60L 2250/20

(86) International application number:
**PCT/JP2022/009005**

(87) International publication number:
**WO 2022/209555 (06.10.2022 Gazette 2022/40)**

(54) **CHARGING DEVICE USE SYSTEM, SERVER, AND PROGRAM FOR CHARGING DEVICE USE SYSTEM**

SYSTEM ZUR VERWENDUNG EINER LADEVORRICHTUNG, SERVER UND PROGRAMM FÜR EIN SYSTEM ZUR VERWENDUNG EINER LADEVORRICHTUNG

SYSTÈME D'UTILISATION DE DISPOSITIF DE CHARGE, SERVEUR ET PROGRAMME POUR SYSTÈME D'UTILISATION DE DISPOSITIF DE CHARGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **29.03.2021  JP 2021055832**

(43) Date of publication of application:
**07.02.2024  Bulletin 2024/06**

(73) Proprietor: **Yazaki Corporation**
**Tokyo, 108-0075 (JP)**

(72) Inventor: **IKEGAYA Koji**
**Susono-shi, Shizuoka 410-1194 (JP)**

(74) Representative: **Hoffmann Eitle**
**Patent- und Rechtsanwälte PartmbB**
**Arabellastraße 30**
**81925 München (DE)**

(56) References cited:
JP-A- 2002 281 668     JP-A- 2004 295 161
JP-A- 2011 107 929     JP-A- 2011 227 541
JP-A- 2014 016 756     JP-A- 2018 074 815
JP-A- 2019 079 346     US-A1- 2011 193 522
US-A1- 2018 111 494     US-A1- 2019 118 667

- YAMADA, HIDEO: "(8) Overview of Park 24. Business models learned from different business categories", NIKKEI, 4 November 2014 (2014-11-04), pages 87 - 92, XP009540945, ISBN: 978-4-532-19747-6

**Description**

TECHNICAL FIELD

The present invention relates to a charger using system, a server, and a program for the charger using system.

BACKGROUND ART

Examples of electrically driven vehicles on which batteries are mounted include electric cars, hybrid vehicles, and electric wheelchairs. Incidentally, one of the supply problems of electrically driven vehicles (in particular, electric cars) is concern that vehicles cannot be charged when batteries run out outside as long as charging stations do not increase all over the country.

Accordingly, an information management device used to permit another user to use a charger installed in a private residence while an owner of the charger is not using the charger (Patent Literatures 1 and 2). However, since chargers are installed only for people owning and using electrically driven vehicles, there is a problem that chargers cannot be widely supplied.

US 2018/111494 Al relates to a cloud system which is configured to execute method operations for communicating with connected vehicles of users having user accounts with the cloud system. The method includes receiving a signal from of an electric vehicle that is associated to a user account. The signal of the electric vehicle is received in response to the electric vehicle parking over a charging pad of a charging unit, and the charging unit is one of a plurality of charging units located in various geolocations. The method includes sending instructions to the charging unit to enable initiation of charge transfer to a battery of the electric vehicle upon the cloud system confirming that the user account for the electric vehicle is enabled for automatic charging upon parking over said charging pad of the charging unit. The method includes receiving data from the charging unit indicative of a discontinuing of the charge transfer by the charging pad responsive to detecting that the electric vehicle is no longer parked over said charging pad.

CITATION LIST

PATENT LITERATURE

Patent Literature 1: JP2020-170443A
Patent Literature 2: JP2020-171172A

SUMMARY OF INVENTION

TECHNICAL PROBLEM

The present invention has been devised in view of the forgoing circumstances and an object of the present invention is to provide a charger using system, a server, and a program for the charger using system capable of widely supplying chargers.

SOLUTION TO PROBLEM

The present invention is defined in the appended independent claims. Further preferred embodiments are defined in the dependent claims.

To achieve the above-described object, a charger using system, a server, and a program for the charger using system according to the present invention have the following features [1] to [9].

[1] A charger using system including:

a server;
a first terminal owned by a user of a charger and configured to be able to communicate with the server; and
a second terminal owned by a person lending an installation place of the charger and configured to be able to communicate with the server, wherein
the first terminal includes a first acquisition unit that acquires identification information of the charger when the charger is used, and a first transmission unit that transmits a use request of the charger and the identification information, and
the server includes a first reception unit that receives the use request and the identification information, a claim price calculation unit that calculates a claim price claimed to the user when the use request is received, a claim price presentation unit that presents the claim price to the first terminal, a payment price calculation unit that calculates a payment price paid to a person lending the installation place when the use request is received, and a payment price presentation unit that presents the payment price to the second terminal.

[2] The charger using system according to [1], wherein

the first terminal includes a second acquisition unit that acquires use information of the charger and a second transmission unit that transmits the use information,
the server includes a second reception unit that receives the use information, and
the payment price calculation unit calculates an electric bill applied to use of the charger based on the use information and includes the electric bill and a charger installation fee in a payment price fee.

[3] The charger using system according to [2], wherein

the first terminal includes a first input unit capable of selecting and inputting one of charge by time, charge by distance, and full charge, a second input unit capable of inputting a time when charging by time, and a third input unit capable of inputting a distance when charging by distance, and
the second acquisition unit acquires information input by the first, second, and third input units or information calculated from the input information as the use information.

[4] The charger using system according to any one of [1] to [3], wherein the first terminal includes a third acquisition unit that acquires a charge time of the charger, and a third transmission unit that transmits a charging start command to the charger and then transmits a charging end command to the charger after the charge time has passed.
[5] The charger using system according to [4], wherein the first terminal includes a first report unit that reports the transmission of the charging end command.
[6] The charger using system according to [4] or [5], wherein the server includes a fourth acquisition unit that acquires the charge time of the charger and a transmission time of the charging start command through communication with the first terminal, a management unit that manages a use situation of the charger based on the charge time and the transmission time of the charging start command acquired by the fourth acquisition unit, and a reservation processing unit that performs a reservation process of the available charger through communication with the first terminal.
[7] The charger using system according to [4] or [5], wherein

the server includes a fourth acquisition unit that acquires a charge time of the charger and a transmission time of the charging start command through communication with the first terminal, and a management unit that manages a use situation of the charger based on the charge time and the transmission time of the charging start command acquired by the fourth acquisition unit, and
the first terminal includes a fourth input unit capable of inputting the charger of which a use situation is desired to be checked, and a second report unit that communicates with the server and acquires the use situation of the charger input by the fourth input unit.

[8] A server capable of communicating with a first terminal owned by a user of a charger and a second terminal owned by a person lending an installation place of the charger, the server including:

a first reception unit configured to receive a use request transmitted from the first terminal and identification information of the charger;
a claim price calculation unit configured to calculate a claim price claimed to the user when the use request is received;
a claim price presentation unit configured to present the claim price to the first terminal;
a payment price calculation unit configured to calculate a payment price paid to a person lending the installation place when the use request is received; and
a payment price presentation unit configured to present the payment price to the second terminal.

[9] A program for a charger using system causing a computer to function as:

a first reception unit configured to receive a use request and identification information of a charger transmitted from a first terminal owned by a user;

a claim price calculation unit configured to calculate a claim price claimed to the user when the use request is received;

a claim price presentation unit configured to present the claim price to the first terminal;

a payment price calculation unit configured to calculate a payment price paid to a person lending an installation place of the charger when the use request is received; and

a payment price presentation unit configured to present the payment price to a second terminal owned by the person lending the installation place of the charger.

In the charger using system, the server, and the program for the charger using system that have the foregoing configurations of [1], [8], and [9], the server presents the claim price claimed to the user to the first terminal and presents the payment price paid to the person lending the installation place of the charger to the second terminal. Accordingly, the claim price can be received from the user using the charger and the payment price can be paid to the user lending the installation place of the charger. Therefore, people lending installation places of chargers can increase and the charger can be widely supplied.

In the charger using system that has the foregoing configuration of [2], the payment price includes an electric bill and a charger installation fee. Accordingly, the payment fee is not lower than the electric bill. People lending installation places of chargers can increase and the charger can be widely supplied.

In the charger using system that has the foregoing configuration of [3], it is possible to perform charge fit for the user who desires to use the charger.

In the charger using system that has the foregoing configuration of [4], it is possible to control the charger using the first terminal.

In the charger using system that has the foregoing configuration of [5], it is possible to prevent the charger from being in the use state despite the end of the charge.

In the charger using system that has the foregoing configuration of [6], it is possible to manage a use situation of the charger and make a reservation through communication with the first terminal.

In the charger using system that has the foregoing configuration of [7], the server can manage the use situation of the charger and report the use situation to another first terminal through communication with the first terminal.

ADVANTAGEOUS EFFECTS OF INVENTION

According to the present invention, it is possible to provide a charger using system, a server, and a program for the charger using system capable of widely supplying chargers.

The present invention has been described in brief above. When a mode for carrying the present invention to be described below (hereinafter referred to as an "embodiment") is read through, the details of the present invention will be further clarified.

BRIEF DESCRIPTION OF DRAWINGS

Fig. 1 is a diagram illustrating a configuration of a charger using system according to an example of an embodiment.
Fig. 2 is a diagram illustrating a configuration of a terminal illustrated in Fig. 1.
Fig. 3 is a diagram illustrating a configuration of a server illustrated in Fig. 1.
Fig. 4 is a diagram illustrating a vehicle map stored in a DB illustrated in Fig. 3.
Fig. 5 is a diagram illustrating a power unit price map stored in the DB illustrated in Fig. 3.
Fig. 6 is a flowchart illustrating a use processing procedure performed by the terminal illustrated in Fig. 1.
Fig. 7 is a diagram illustrating an input screen displayed on the terminal illustrated in Fig. 1.
Fig. 8 is a flowchart illustrating a use processing procedure performed by the server illustrated in Fig. 1.
Fig. 9 is a flowchart illustrating a reservation processing procedure performed by the server illustrated in Fig. 1.
Fig. 10 is a flowchart illustrating a reservation processing procedure performed by the terminal illustrated in Fig. 1.

DESCRIPTION OF EMBODIMENTS

A specific embodiment of the present invention will be described below with reference to the drawings.

In the embodiment, an example in which an electrically driven vehicle 40 is charged by a charger 2 will be described. However, a charger may be a charger that is able to charge a device for which charging is necessary or may be a charger by which a smartphone, a tablet, or the like is charged. In the embodiment, an electric car will be described as an example of an electrically driven vehicle. The electrically driven vehicle may be a hybrid vehicle, an electrically bicycle, or an electrically driven motorcycle.

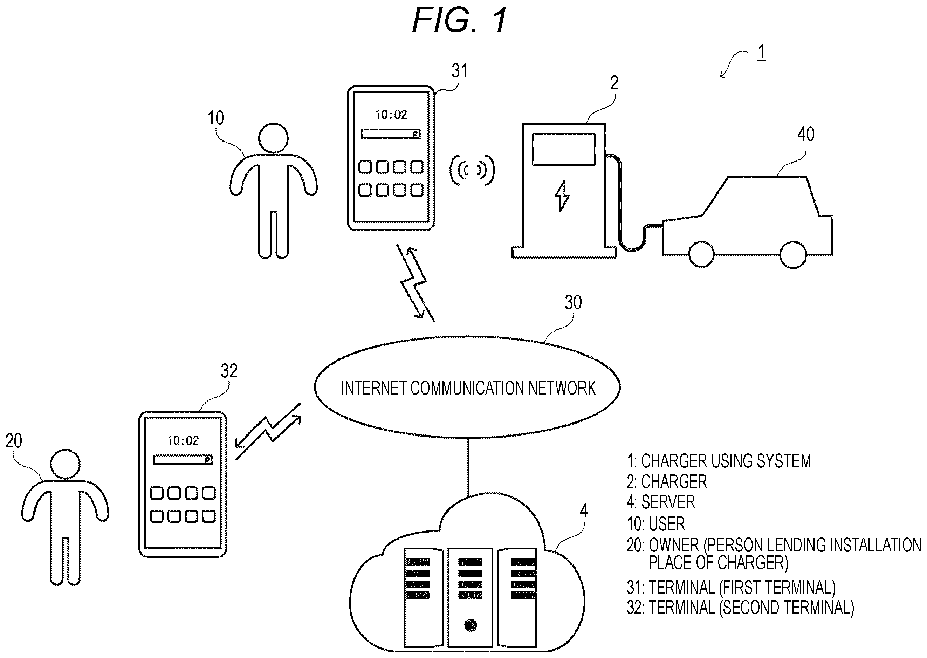

As illustrated in Fig. 1, a charger using system 1 includes a plurality of chargers 2 (in Fig. 1, one charger 2 is illustrated representatively), a terminal (first terminal) 31 that is owned by a user 10 using the charger 2, a terminal (second terminal) 32 owned by a person lending an installation place of the charger 2, that is, an owner 20 of the installation place, and a server 4 capable of communicating with the terminals 31 and 32. In the embodiment, the terminals 31 and 32 and the server 4 are configured to be able to communicate with each other via an Internet communication network 30. The terminal 31 and the charger 2 are configured to be able to communicate with each other according to, for example, Bluetooth (BT (registered trademark)) communication or Wi-Fi (registered trademark) which is one wireless communication standard on which a line use fee is not applied.

The charger 2 is a medium-speed charger that outputs, for example, power less than 50 kW and can charge the electrically driven vehicle 40. As an input to the charger 2, direct-current power may be used, alternating-current power of 200 V to 400 V may be used, or direct-current power output from a fuel cell generating hydrogen power may be used. The charger 2 is installed in a pay-by-the hour parking lot or a parking lot of a convenience store or a restaurant all over the country. In the embodiment, the charger 2 is lent for free to the owner 20 from an operating company that operates the charger using system 1.

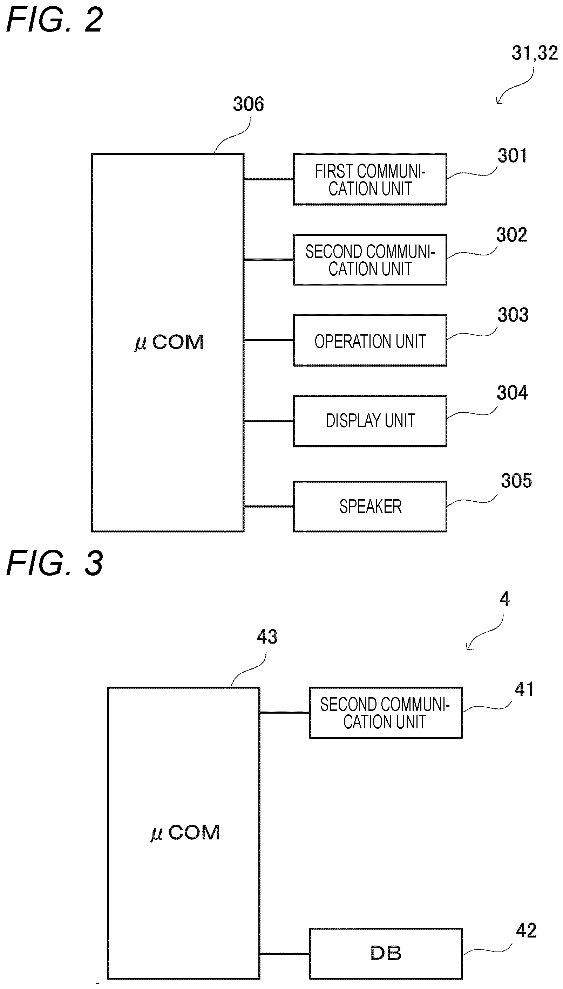

The terminals 31 and 32 are configured with, for example, tablets, smartphones, personal computers (PCs), or the like. The terminals 31 and 32 each include a first communication unit 301, a second communication unit 302, an operation unit 303, a display unit 304, a speaker 305, and a μCOM 306, as illustrated in FIG. 2. The first communication unit 301 is a communication unit that communicates with the charger 2. The second communication unit 302 is a communication unit connected to the Internet communication network 30. The operation unit 303 performs various operations by the user 10. The display unit 304 displays various types of information. The speaker 305 generates a report sound or the like. The μCOM 306 includes a memory such as a read only memory (ROM), a random access memory (RAM) and a central processing unit (CPU) performing an operation according to a program stored in the memory and is in charge of controlling the terminals 31 and 32.

In the embodiment, an example in which a touch panel is configured by integrating the operation unit 303 and the display unit 304 will be described. In the terminals 31 and 32, a charger using application delivered by an operating company that operates the charger using system 1 is downloaded and stored.

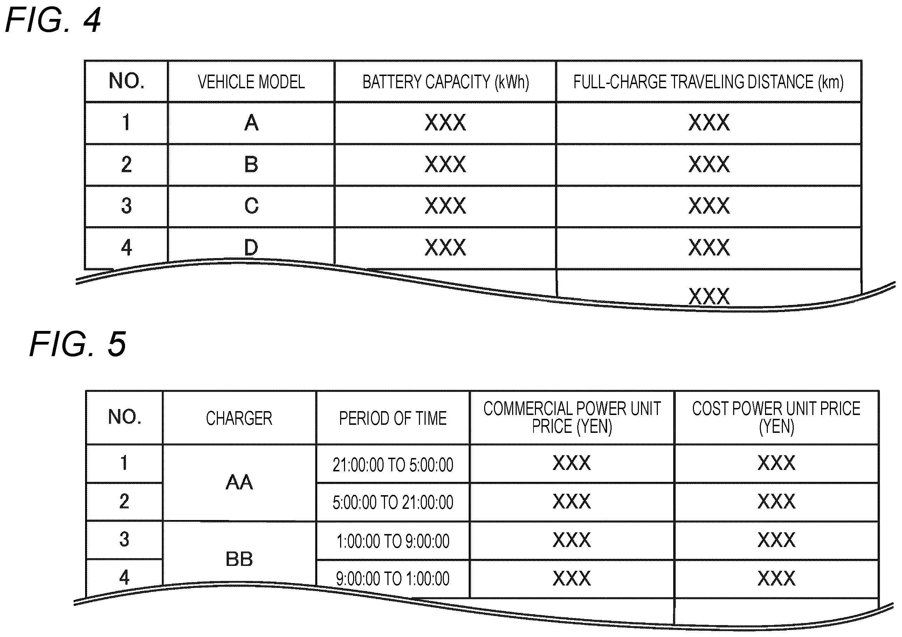

The server 4 includes a second communication unit 41, a DB 42, and a μCOM 43, as illustrated in Fig. 3. The second communication unit 41 is a communication unit for connection to the Internet communication network 30. In the DB 42, registration information (an installation place, an ID (=identification information), an account information of a payee, or the like) or a use situation of the charger 2 and registration information (a name, a vehicle model, a contact, account information of a payee, credit card information, and the like) of the user 10 are stored. In the DB 42, a vehicle map illustrated in Fig. 4 is stored. The vehicle map is a map indicating a relationship between a vehicle model, a battery capacity mounted on an electrically driven vehicle of the vehicle model, and a full charge traveling distance.

In the DB 42, a power unit price map is stored as illustrated in Fig. 5. The power unit price map is a map indicating a relationship between an ID of the charger 2, a use period of time of the charger 2, a commercial power unit price, and a cost power unit price. The commercial power unit price is a power unit price of an electric bill claimed to the user 10 by the operating company and the cost power unit price is a unit price of the electric bill paid to the owner 20 by the operating company. In the embodiment, the cost power unit price is equal to a unit price of the electric bill claimed to the owner 20 by the electric company or the power retail company. For the charger 2 to use cheap power, a power meter different from that of a store may be mounted only for the charger 2 and a contract may be made with a power company or a power retail company different from that of the store so that power of the power retail company different from that of the store can be used. Here, in a unit price of the power retail company with which a contract is made for the charger 2, a cost power unit price is set. The μCOM 43 in charge of controlling the server 4 performs a payment process for a payment fee (=payment price) paid to the owner 20 and performs a claiming process for a claim fee (=claim price) claimed to the user 10.

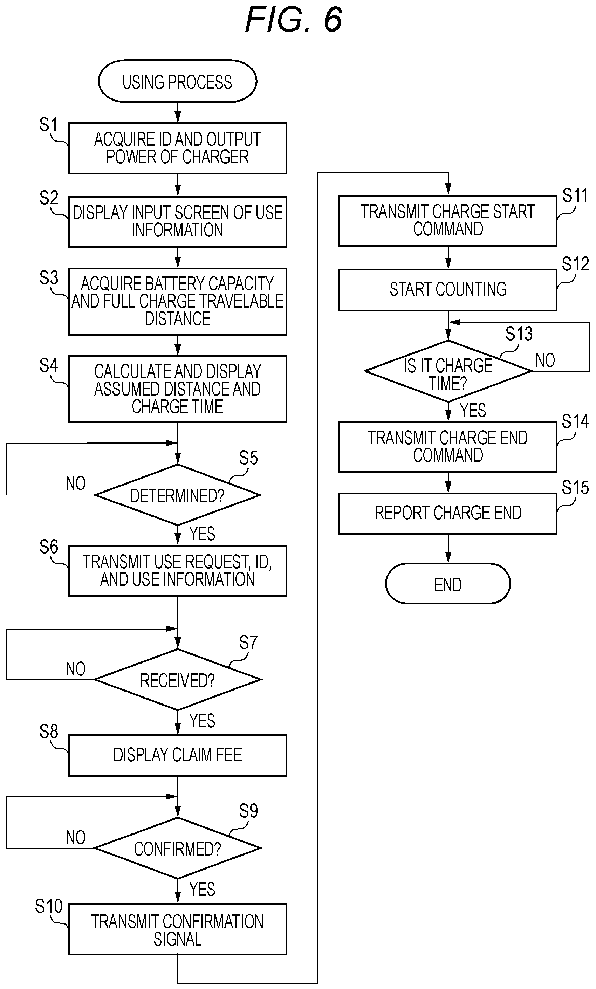

Next, an operation of the charger using system 1 that have the above-described configuration will be described with reference to Fig. 6. When there is an available charger device 2 and the user 10 desires to use the charger 2, the electrically driven vehicle 40 is connected to the charger 2. Thereafter, the user 10 uses the charger using system 1 to start up a charger using application to use the charger 2.

Accordingly, the μCOM 306 of the terminal 31 (hereinafter abbreviated to a "terminal") executes the charger using application. The user 10 operates the terminal 31 to set the charger 2 to a use mode. Accordingly, the terminal 31 performs a using process. First, the terminal 31 functions as a first acquisition unit and acquires an ID and output power (kW) of the charger which the user 10 desires to use (S1). In S1, the terminal 31 may acquire the ID and the output power (kW) by communicating with the charger or may read a barcode or a QR code (registered trademark) attached to the charger 2.

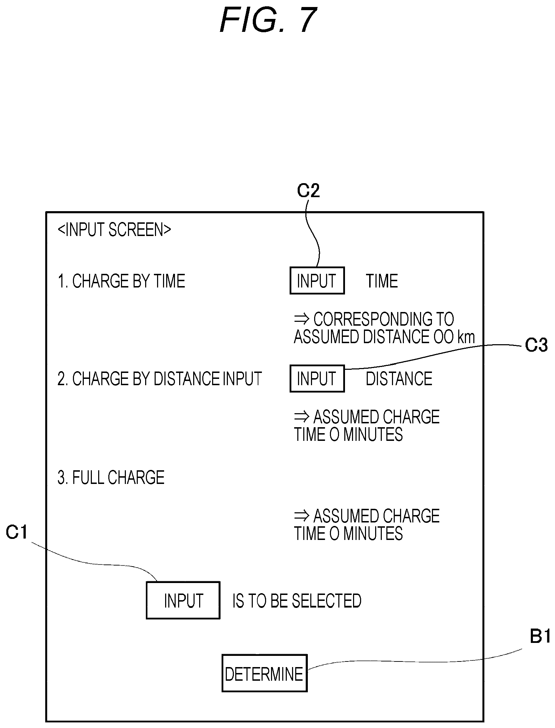

Thereafter, the terminal 31 displays an input screen on which use information of the charger 2 is input (S2). An example of the input screen is illustrated in Fig. 7. As illustrated in Fig. 7, the terminal 31 displays an input field C1 in which one of "1. Charge by time," "2. Charge by distance," and "3. Full charge" can be selected and input on a touch panel configured with the operation unit 303 and the display unit 304. The terminal 31 displays an input field C2 in which a time can be input when charging by time and displays an input field C3 in which a distance can be input when charging by distance. As apparent from the above, the operation unit 303 and the display unit 304 function as first, second, and third input units.

Subsequently, the terminal 31 acquires a battery capacity and a full charge travelable distance of the electrically driven vehicle 40 desired to be charged (S3). In S3, the terminal 31 requests the battery capacity and the full charge travelable distance from the server 4. When the request is received, the server 4 reads vehicle model information included in registration information associated with an ID of the terminal 31 or a login ID of an application. The server 4 reads a battery capacity (kWh) and a full charge travelable distance (km) corresponding to the vehicle model information read from the vehicle map and transmits the battery capacity (kWh) and the full charge travelable distance (km) to the terminal 31. The terminal 31 can acquire the battery capacity and the full charge travelable distance by receiving the battery capacity (kWh) and the full charge travelable distance (km). The present invention is not limited thereto. The battery capacity and the full charge travelable distance may be stored in the memory of the terminal 31 in registration, and the terminal 31 may read the battery capacity and the full charge travelable distance from the memory so that the battery capacity and the full charge travelable distance can be acquired.

Subsequently, the terminal 31 functions as the second and third acquisition units. An assumed distance of the charge amount by which vehicle can travel when selecting "1. Charge by time" or a charge time taken for the charge when selecting "2. Charge by distance," and a charge time taken for the charge when selecting "3. Full charge" are calculated and displayed (S4). In S4, the terminal 31 calculates and displays the assumed distance of the charge amount when a time is input to the input field C2 illustrated in Fig. 7. The assumed distance can be calculated by the following Expression (1), for example.

Assumed distance (km) = full charge travelable distance (km) × output power (kW) of charger 2 × input time (h) / battery capacity (kWh)    (1)

When a distance is input to the input field C3, the terminal 31 calculates and displays a charge time taken for the charge corresponding to the input distance. The charge time when charging by distance can be calculated by the following Expression (2), for example.

Charge time = input distance (km) / full charge travelable distance (km) × battery capacity (kW/h) / output power (kW) of charger    (2)

The terminal 31 calculates and displays a charge time when full charge is performed. The charge time when full-charging can be obtained by the following Expression (3), for example.

$$\text{Charge time} = \{\text{battery capacity (kWh)} - \text{remaining capacity (kWh)}\} / \text{output power (kW) of charger}$$
$$\dots (3)$$

The remaining capacity (kWh) can be obtained from a battery voltage.

In S4, a charge time for full charging is displayed in the input screen illustrated in Fig. 7. In the input screen, an assumed distance corresponding to the time input in the input field C2 is displayed and a charge time for the distance is displayed in the input field C3. When the user 10 inputs one of 1. to 3. in the input fields with reference to the assumed distance and the charge time and presses a determination button B1 (Y in S5), the terminal 31 functions as first and second transmission units and transmits a use request, the ID of the charger 2, and the use information to the server 4 (S6).

In the embodiment, the use information includes at least a charge time taken for the present charge. More specifically, the use information includes a charge time input to the input field C2 when selecting "1. Charge by time", includes a charge time for charge corresponding to the input distance calculated by the terminal 31 when selecting "2. Charge by distance", and includes a charge time until full charge calculated by the terminal 31 when selecting "3. Full charge"

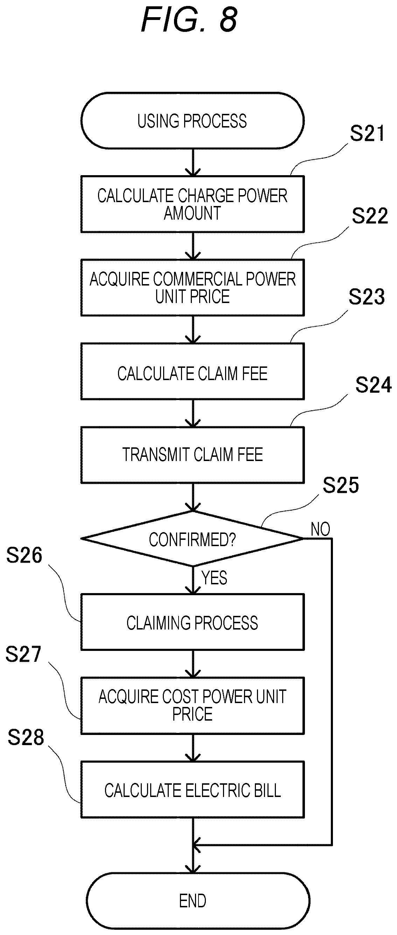

The μCOM 43 of the server 4 (hereinafter abbreviated to the server 4) functions as the first and second reception units and a fourth acquisition unit and performs a using process illustrated in Fig. 8 when a use request, an ID of a charger, and use information are received from the terminal 31. First, the server 4 calculates a charge power amount taken for the present charge (S21). Specifically, the server 4 calculates the charge power amount using the following Expression (4).

Charge power amount (kWh) = output power (kW) of charger 2 × charge time included in use information    (4)

Thereafter, the server 4 acquires a commercial power unit price (yen/WHh) corresponding to the charger 2 from the power unit price map (S22). Subsequently, the server 4 functions as a claim fee calculation unit and calculates a claim fee claimed to the user 10 by multiplying a charge power amount (kWh) by the charge power amount (kWh) as expressed in the following Expression (5), for example (S23).

$$\text{Claim fee} = \text{charge power amount (kWh)} \times \text{commercial power unit price (yen/WHh)} \quad \dots (5)$$

The calculation of the claim fee expressed in Expression (5) is exemplary and the present invention is not limited thereto. As the claim fee, another fee may be further added or a fixed fee may be set regardless of the charge power amount.

The server 4 transmits the calculated claim fee to the terminal 31 (S24). When the claim fee is received (Y in S7 of Fig. 6), the terminal 31 displays the claim fee (S8). When the user 10 checks the claim fee displayed on the terminal 31 and operates a confirmation button (not illustrated) displayed on the terminal 31 (Y in S9), the terminal 31 transmits a confirmation signal to the server 4 (S10), functions as a third transmission unit, and transmits a charge start command to the charger 2 (S11). When the charge start command is received, the charger 2 starts charging.

Thereafter, the terminal 31 starts counting time (S12). When the time reaches the charge time (Y in S13), the terminal 31 functions as the third transmission unit and transmits a charge stop command to the charger 2 (S14). When the charge stop command is received, the charger 2 stops charging. The terminal 31 functions as a first report unit and reports the end of the charge to the user, for example, by outputting a sound or a vibration (S15). Then, the process ends.

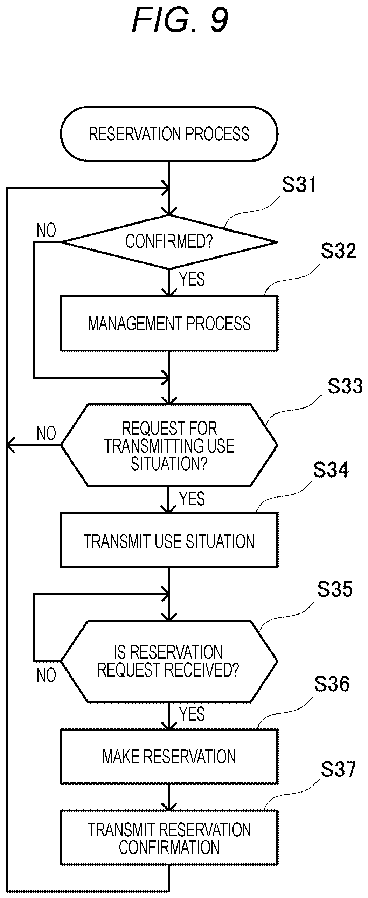

Meanwhile, when the confirmation signal is received from the terminal 31 (Y in S25 of Fig. 9), the server 4 performs a claiming process for the calculated claim fee (S26). Specifically, the server 4 claims the claim fee to a bank account of a payee included in the registration information of the terminal 31 or a credit card company. The server 4 stores the claim fee in the DB 42. The server 4 functions as the fourth acquisition unit and acquires a time at which the confirmation signal is received from the terminal 31 as a transmission time of the charge start command.

Subsequently, the server 4 acquires the cost power unit price corresponding to the charger 2 from the power unit price map (S27). Thereafter, the server 4 functions as a payment fee calculation unit. For example, as expressed in the following Expression (6), the server 4 calculates an electric bill paid to the owner 20 by multiplying the charge power amount by the cost power unit price and stores the calculated electric bill in the DB 42 (S28).

$$\text{Electric bill} = \text{charge power amount (kWh)} \times \text{cost power unit price (yen/kWh)} \quad \dots (6)$$

The server 4 performs a payment process for the owner 20 monthly, for example. The server 4 functions as the payment fee calculation unit and calculates a fee obtained by adding the electric bill stored in the DB 42 and further adding a predetermined charger installation fee. Thereafter, the server 4 transfers a payment fee to a bank account designated by the owner 20. The charger installation fee may be a fixed fee or may increase according to a sold electric amount.

The user 10 can browse a claim fee any time by starting up the charger using application and setting a browse mode. When the user 10 operates the terminal 31, sets the browse mode, and transmits a request for transmitting the claim fee from the terminal 31 to the server 4, the server 4 functions as the claim fee presentation unit, reads a claim fee associated with an ID of the terminal 31 from the DB 42, and transmits the claim fee to the terminal 31. When the claim fee is received, the terminal 31 displays the claim fee on the display unit 304.

The owner 20 can browse the payment fee any time by starting up the charger using application and setting the browse mode. When the owner 20 operates the terminal 32, sets the browse mode, and transmits a request for transmitting the payment fee from the terminal 32 to the server 4, the server 4 reads the payment fee associated with the terminal 32 from the DB 42 and transmits the payment fee to the terminal 32. When the payment fee is received, the terminal 32 displays the payment fee on the display unit 304.

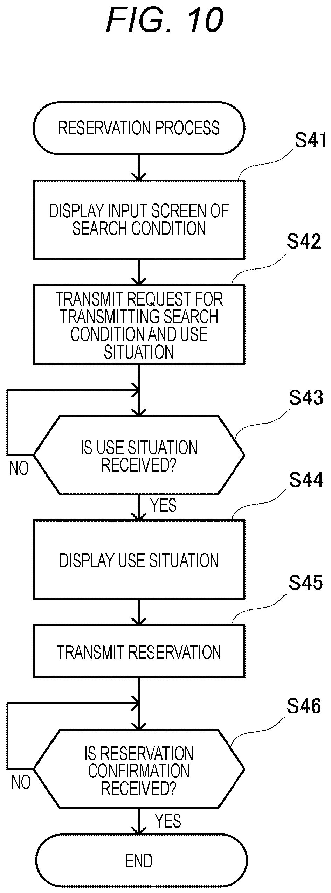

The terminal 31 and the server 4 perform a reservation process illustrated in Figs. 9 and 10 to reserve the charger 2. In the reservation process, when a confirmation signal is received from the terminal 31 (Y in S31), the server 4 functions as a management unit and performs a management process of managing a use situation of the charger 2 based on the acquired charge time of the charger 2 and a transmission time of the charge start command (S32). More specifically, the server 4 determines that the charger 2 of which the ID is received is not available until the charge time has passed from the transmission time. When the confirmation signal is not received (N in S31), the server 4 moves to S33 immediately.

On the other hand, the user 10 who desires to reserve the charger 2 operates the terminal 31 to switch the mode to a reservation mode. When the mode is switched to the reservation mode, the reservation process is performed and the terminal 31 displays an input screen of a search condition (a present location periphery, a designated location periphery, or the like) of the charger 2 on the touch panel configured with the operation unit 303 and the display unit 304 (S41 of Fig. 10). Accordingly, the operation unit 303 and the display unit 304 function as a fourth input unit. When the user 10 operates the terminal 31 and finishes inputting the search condition on the input screen, a request for transmitting the search condition and the use situation of the charger 2 corresponding to the search condition is transmitted to the server 4 (S42).

When the request for transmitting the search condition and the use situation is received (Y in S33 of Fig. 9), the server 4 searches for the charger 2 according to the search condition and transmits the use situation of the searched charger 2 (S34). When the request for transmitting the search condition and the use situation is not received (N in S33), the server 4 returns to S31. When the use situation is received (S43 of Fig. 10), the terminal 31 functions as a second report unit and displays the use situation (S44). Thereafter, when the user 10 checks the use situation and performs a reservation request operation by designating the charger 2 which is not being used or is not reserved and a reservation time, the terminal 31 transmits the designated charger 2 and a reservation request at the reservation time to the server 4 (S45).

When the reservation request is received (Y in S35 of Fig. 9), the server 4 functions as a reservation processing unit and reserves the designated charger 2 and reservation time (S36). Thereafter, the server 4 transmits a reservation confirmation to the terminal 31 (S37), and returns to S31. When the reservation confirmation is received (Y in S46 of Fig. 10), the terminal 31 ends the process.

According to the above-described embodiment, the server 4 transmits a claim fee in response to a request for transmitting the claim fee from the terminal 31 and transmits a payment fee in response to a request for transmitting the payment fee from the terminal 32. Accordingly, the claim fee is received from the user 10 using the charger 2 and the payment fee can be paid to the owner 20 lending the installation place of the charger 2. Therefore, people lending installation places of chargers can increase and the charger can be widely supplied.

According to the above-described embodiment, the payment fee includes an electric bill and a charger installation fee. Accordingly, the payment fee is not lower than the electric bill.

According to the above-described embodiment, the terminal 31 can select and input one of the charge by time, the charge by distance, and the full charge, input a time when charging by time, and input a distance when charging by distance, and acquire a charge time obtained from the input information as use information. Accordingly, it is possible to perform charge fit for the user 10 who desires to use the charger 2.

According to the above-described embodiment, the terminal 31 acquires a charge time of the charger 2, transmits a charge start command to the charger 2, and then transmits a charge end command to the charger after the charge time has passed. Accordingly, it is possible to control the charger 2 using the terminal 31.

According to the above-described embodiment, the terminal 31 reports the transmission of the charging end command to the user 10. Accordingly, it is possible to prevent the charger 2 from being in the use state despite the end of the charge.

According to the above-described embodiment, the server 4 acquires a charge time of the charger 2 and a transmission time of the charge start command through communication with the terminal 31, manages the use situation of the charger 2 based on the acquired charge time and transmission time of the charge start command, and performs a reservation process for an available charger through communication with the terminal 31. Accordingly, the server 4 can manage the use situation of the charger 2 and make a reservation through communication with the terminal 31.

According to the above-described embodiment, the terminal 31 inputs a search condition, communicates with the server 4, and acquires and displays a use situation of the charger corresponding to the input search condition. Accordingly, the server 4 can manage the use situation of the charger 2 and report the use situation to other terminals 31 through communication with the terminal 31 using the charger 2. That is, as long as the terminal 31 can be operated and the use situation of the charger 2 can be acquired even during using the charger 2 in a store or the like, it can be known how soon the charge ends. The terminal 31 can be operated to make a reservation after the charge ends.

According to the above-described embodiment, the terminal 31 calculates the charge time when selecting charge by distance and full charge, but the present invention is not limited thereto. The terminal 31 may transmit a distance input in the input field C3 or a battery voltage as use information to the server 4, and the server 4 may calculate a charge time based on the use information and transmit the calculated charge time to the terminal 31.

According to the above-described embodiment, one of charge by time, charge by distance, and full charge can be selected using the terminal 31, but the present invention is not limited thereto. For example, only full charge may be able to be performed.

According to the above-described embodiment, the terminal 31 counts the charge time and transmits the charge end command to the charger 2, but the present invention is not limited thereto. The charger 2 may acquire a charge time through communication with the terminal 31 or the server 4, and the charger 2 may count the charge time, and the charge may automatically end.

According to the above-described embodiment, money is claimed or paid as a claim price or a payment price, but the present invention is not limited thereto. As the claim price or the payment price, points may be claimed or paid.

When it is a reservation time, the server 4 may transmit, to the terminal 31, the fact that it is the reservation time, and the terminal 31 may report that it is the reservation time. The server 4 may cancel the reservation when a charge request cannot be received from the reserved terminal 31 although it is the reservation time.

Priority is claimed on Japanese Patent Application (No. 2021-055832), filed March 29, 2021.

INDUSTRIAL APPLICABILITY

According to the present invention, it is possible to provide a charger using system, a server, and a program for the charger using system capable of widely supplying chargers. The present invention that has the advantageous effects is useful for a charger using system, a server, and a program for the charger using system.

REFERENCE SIGNS LIST

1 Charger using system
2 Charger
4 Server
10 User
20 Owner (person lending installation place of charger)
31 Terminal (first terminal)
32 Terminal (second terminal)
43 μCOM (first reception unit, claim fee calculation unit, claim fee presentation unit, payment fee calculation unit, payment fee presentation unit, second reception unit, fourth acquisition unit, management unit, reservation processing unit)
306 μCOM (first acquisition unit, first transmission unit, second acquisition unit, second transmission unit, third acquisition unit, third transmission unit, first report unit, second report unit)
303 Operation unit (first input unit, second input unit, third input unit, fourth input unit)
304 Display unit (first input unit, second input unit, third input unit, fourth input unit)

**Claims**

1. A charger using system (1) comprising:

   a server (4);
   a first terminal (31) owned by a user (10) of a charger and configured to be able to communicate with the server (4); and
   a second terminal (32) owned by a person (20) lending an installation place of the charger and configured to be able to communicate with the server (4), wherein:

      the first terminal (31) includes a first acquisition unit (306) that acquires identification information of the charger when the charger is used, and a first transmission unit (306) that transmits a use request of the charger and the identification information; and
      the server (4) includes a first reception unit (43) that receives the use request and the identification information, a claim price calculation unit (43) that calculates a claim price claimed to the user (10) when the use request is received, a claim price presentation unit that presents the claim price to the first terminal (31), a payment price calculation unit (43) that calculates a payment price paid to a person (20) lending the installation place when the use request is received, and a payment price presentation unit (43) that presents the payment price to the second terminal (32); wherein
      the first terminal (31) includes a third acquisition unit (306) that acquires a charge time of the charger, and a third transmission unit (306) that transmits a charging start command to the charger and then transmits a charging end command to the charger after the charge time has passed; and
      the first terminal (31) includes a first report unit (306) that reports the transmission of the charging end command.

2. The charger using system (1) according to claim 1, wherein:

   the first terminal (31) includes a second acquisition unit (306) that acquires use information of the charger and a second transmission unit (306) that transmits the use information;
   the server (4) includes a second reception unit (43) that receives the use information; and
   the payment price calculation unit (43) calculates an electric bill applied to use of the charger based on the use information and includes the electric bill and a charger installation fee in a payment price fee.

3. The charger using system (1) according to claim 2, wherein:

   the first terminal (31) includes a first input unit (303, 304) capable of selecting and inputting one of charge by time, charge by distance, and full charge, a second input unit (303, 304) capable of inputting a time when charging by time, and a third input unit (303, 304) capable of inputting a distance when charging by distance; and
   the second acquisition unit (306) acquires information input by the first, second, and third input units or information calculated from the input information as the use information.

4. The charger using system (1) according to any one of claims 1 to 3, wherein
   the server (4) includes a fourth acquisition unit (43) that acquires the charge time of the charger and a transmission time of the charging start command through communication with the first terminal (31), a management unit (43) that manages a use situation of the charger based on the charge time and the transmission time of the charging start command acquired by the fourth acquisition unit (43), and a reservation processing unit (43) that performs a reservation process of the available charger through communication with the first terminal (31).

5. The charger using system (1) according to any one of claims 1 to 3, wherein:

   the server (4) includes a fourth acquisition unit (43) that acquires a charge time of the charger and a transmission time of the charging start command through communication with the first terminal (31), and a management unit (43) that manages a use situation of the charger based on the charge time and the transmission time of the charging start command acquired by the fourth acquisition unit (43); and
   the first terminal (31) includes a fourth input unit (303, 304) capable of inputting the charger of which a use situation is desired to be checked, and a second report unit (306) that communicates with the server (4) and acquires the use situation of the charger input by the fourth input unit (303, 304).

6. A server (4) capable of communicating with a first terminal (31) owned by a user (10) of a charger and a second terminal (32) owned by a person (20) lending an installation place of the charger, the server (4) comprising:

   a first reception unit (43) configured to receive a use request transmitted from the first terminal (31) and identification information of the charger;
   a claim price calculation unit (43) configured to calculate a claim price claimed to the user (10) when the use request is received;
   a claim price presentation unit configured to present the claim price to the first terminal (31);
   a payment price calculation unit (43) configured to calculate a payment price paid to a person (20) lending the installation place when the use request is received; and
   a payment price presentation unit (43) configured to present the payment price to the second terminal (32); wherein
   the first terminal (31) includes a third acquisition unit (306) that acquires a charge time of the charger, and a third transmission unit (306) that transmits a charging start command to the charger and then transmits a charging end command to the charger after the charge time has passed; and
   the first terminal (31) includes a first report unit (306) that reports the transmission of the charging end command.

7. A program for a charger using system (1) causing a computer to function as:

   a first reception unit (43) configured to receive a use request and identification information of a charger transmitted from a first terminal (31) owned by a user (10);
   a claim price calculation unit (43) configured to calculate a claim price claimed to the user (10) when the use request is received;
   a claim price presentation unit configured to present the claim price to the first terminal (31);
   a payment price calculation unit (43) configured to calculate a payment price paid to a person (20) lending an installation place of the charger when the use request is received; and
   a payment price presentation unit (43) configured to present the payment price to a second terminal (32) owned by the person (20) lending the installation place of the charger; wherein
   the first terminal (31) includes a third acquisition unit (306) that acquires a charge time of the charger, and a third transmission unit (306) that transmits a charging start command to the charger and then transmits a charging end command to the charger after the charge time has passed; and
   the first terminal (31) includes a first report unit (306) that reports the transmission of the charging end command.

**Patentansprüche**

1. System zur Verwendung einer Ladevorrichtung (1), umfassend:

   einen Server (4);
   ein erstes Endgerät (31) im Eigentum eines Benutzers (10) einer Ladevorrichtung und ausgebildet, mit dem Server (4) kommunizieren zu können; und
   ein zweites Endgerät (32) im Eigentum einer Person (20), einen Installationsplatz der Ladevorrichtung zur Verfügung stellend, und ausgebildet, mit dem Server (4) kommunizieren zu können, wobei:

   das erste Endgerät (31) eine erste Erfassungseinheit (306), die Identifikationsinformationen der Ladevorrichtung erfasst, wenn die Ladevorrichtung verwendet wird, und eine erste Übertragungseinheit (306), die eine Nutzungsanforderung der Ladevorrichtung und die Identifikationsinformationen überträgt, einschließt; und

   der Server (4) eine erste Empfangseinheit (43) einschließt, die die Nutzungsanforderung und die Identifikationsinformationen empfängt, eine Berechnungseinheit (43) für den Forderungsbetrag, die einen dem Benutzer (10) in Rechnung zu stellenden Forderungsbetrag berechnet, wenn die Nutzungsanforderung empfangen wird, eine Präsentationseinheit für den Forderungsbetrag, die den Forderungsbetrag dem ersten Endgerät (31) präsentiert, eine Berechnungseinheit (43) für den Auszahlungsbetrag, die einen Auszahlungsbetrag berechnet, der an eine Person (20), den Installationsplatz zur Verfügung stellend, gezahlt wird bei Empfang der Nutzungsanforderung, und eine Präsentationseinheit (43) für den Auszahlungsbetrag, die den Auszahlungsbetrag dem zweiten Endgerät (32) präsentiert; wobei
   das erste Endgerät (31) eine dritte Erfassungseinheit (306), die eine Ladezeit der Ladevorrichtung erfasst, und eine dritte Übertragungseinheit (306), die einen Ladestartbefehl an die Ladevorrichtung überträgt und dann einen Ladeendbefehl an die Ladevorrichtung überträgt, nachdem die Ladezeit verstrichen ist, einschließt; und
   das erste Endgerät (31) eine erste Meldeeinheit (306), die die Übertragung des Ladeendbefehls meldet, einschließt.

2. System zur Verwendung einer Ladevorrichtung (1) nach Anspruch 1, wobei:

   das erste Endgerät (31) eine zweite Erfassungseinheit (306), die Nutzungsinformationen der Ladevorrichtung erfasst, und eine zweite Übertragungseinheit (306), die die Nutzungsinformationen überträgt, einschließt;
   der Server (4) eine zweite Empfangseinheit (43), die die Nutzungsinformationen empfängt, einschließt; und
   die Berechnungseinheit (43) für den Auszahlungsbetrag Stromkosten berechnet, die auf die Nutzung der Ladevorrichtung angewendet werden, basierend auf den Nutzungsinformationen, und die Stromkosten und eine Installationsgebühr der Ladevorrichtung in einer Auszahlungsbetragsgebühr einschließt.

3. System zur Verwendung einer Ladevorrichtung (1) nach Anspruch 2, wobei:

   das erste Endgerät (31) eine erste Eingabeeinheit (303, 304), die fähig ist, eines von Laden nach Zeit, Laden nach Entfernung und Vollladung auszuwählen und einzugeben, eine zweite Eingabeeinheit (303, 304), die fähig ist, eine Zeit einzugeben, wenn Laden nach Zeit durchgeführt wird, und eine dritte Eingabeeinheit (303, 304), die fähig ist, eine Entfernung einzugeben, wenn Laden nach Entfernung durchgeführt wird, einschließt; und
   die zweite Erfassungseinheit (306) Informationen, die von den ersten, zweiten und dritten Eingabeeinheiten eingegeben werden, oder Informationen, die aus den eingegebenen Informationen berechnet werden, als die Nutzungsinformationen erfasst.

4. System zur Verwendung einer Ladevorrichtung (1) nach einem der Ansprüche 1 bis 3, wobei der Server (4) eine vierte Erfassungseinheit (43), die die Ladezeit der Ladevorrichtung und einen Übertragungszeitpunkt des Ladestartbefehls durch Kommunikation mit dem ersten Endgerät (31) erfasst, eine Verwaltungseinheit (43), die einen Nutzungsstatus der Ladevorrichtung, basierend auf der Ladezeit und dem durch die vierte Erfassungseinheit (43) erfassten Übertragungszeitpunkt des Ladestartbefehls, verwaltet, und eine Reservierungsverarbeitungseinheit (43), die einen Reservierungsprozess der verfügbaren Ladevorrichtung durch Kommunikation mit dem ersten Endgerät (31) ausführt, einschließt.

5. System zur Verwendung einer Ladevorrichtung (1) nach einem der Ansprüche 1 bis 3, wobei:

der Server (4) eine vierte Erfassungseinheit (43), die eine Ladezeit der Ladevorrichtung und einen Übertragungszeitpunkt des Ladestartbefehls durch Kommunikation mit dem ersten Endgerät (31) erfasst, und eine Verwaltungseinheit (43), die einen Nutzungsstatus der Ladevorrichtung, basierend auf der Ladezeit und dem durch die vierte Erfassungseinheit (43) erfassten Übertragungszeitpunkt des Ladestartbefehls verwaltet, einschließt; und

das erste Endgerät (31) eine vierte Eingabeeinheit (303, 304), die fähig ist, die Ladevorrichtung einzugeben, deren Nutzungsstatus überprüft werden soll, und eine zweite Meldeeinheit (306), die mit dem Server (4) kommuniziert und den Nutzungsstatus der von der vierten Eingabeeinheit (303, 304) eingegebenen Ladevorrichtung erwirbt, einschließt.

6.  Server (4), der mit einem ersten Endgerät (31) im Eigentum eines Benutzers (10) einer Ladevorrichtung und einem zweiten Endgerät (32) im Eigentum einer Person (20), einen Installationsplatz der Ladevorrichtung zur Verfügung stellend, kommunizieren kann, wobei der Server (4) umfasst:

eine erste Empfangseinheit (43), ausgebildet, eine Nutzungsanforderung, die von dem ersten Endgerät (31) übertragen wird, und Identifikationsinformationen der Ladevorrichtung zu empfangen;
eine Berechnungseinheit (43) für den Forderungsbetrag, ausgebildet, einen Forderungsbetrag zu berechnen, der dem Benutzer (10) in Rechnung gestellt wird, wenn die Nutzungsanforderung empfangen wird;
eine Präsentationseinheit für den Forderungsbetrag, ausgebildet, den Forderungsbetrag dem ersten Endgerät (31) zu präsentieren;
eine Berechnungseinheit (43) für den Auszahlungsbetrag, ausgebildet, einen Auszahlungsbetrag zu berechnen, der an eine Person (20), den Installationsplatz zur Verfügung stellend, gezahlt wird, wenn die Nutzungsanforderung empfangen wird; und
eine Präsentationseinheit (43) für den Auszahlungsbetrag, ausgebildet, den Auszahlungsbetrag dem zweiten Endgerät (32) zu präsentieren; wobei
das erste Endgerät (31) eine dritte Erfassungseinheit (306), die eine Ladezeit der Ladevorrichtung erfasst, und eine dritte Übertragungseinheit (306), die einen Ladestartbefehl an die Ladevorrichtung überträgt und dann einen Ladeendbefehl an die Ladevorrichtung überträgt, nachdem die Ladezeit verstrichen ist, einschließt; und
das erste Endgerät (31) eine erste Meldeeinheit (306), die die Übertragung des Ladeendbefehls meldet, einschließt.

7.  Programm für ein System zur Verwendung einer Ladevorrichtung (1), das bewirkt, dass ein Computer fungiert als:

eine erste Empfangseinheit (43), ausgebildet, eine Nutzungsanforderung und Identifikationsinformationen einer Ladevorrichtung zu empfangen, die von einem ersten Endgerät (31) im Eigentum eines Benutzers (10) übertragen werden;
eine Berechnungseinheit (43) für den Forderungsbetrag, ausgebildet, einen Forderungsbetrag zu berechnen, der dem Benutzer (10) in Rechnung gestellt wird, wenn die Nutzungsanforderung empfangen wird;
eine Präsentationseinheit für den Forderungsbetrag, ausgebildet, den Forderungsbetrag dem ersten Endgerät (31) zu präsentieren;
eine Berechnungseinheit (43) für den Auszahlungsbetrag, ausgebildet, einen Auszahlungsbetrag zu berechnen, der an eine Person (20), einen Installationsplatz der Ladevorrichtung zur Verfügung stellend, gezahlt wird, wenn die Nutzungsanforderung empfangen wird; und
eine Präsentationseinheit (43) für den Auszahlungsbetrag, ausgebildet, den Auszahlungsbetrag einem zweiten Endgerät (32) im Eigentum der Person (20), den Installationsplatz der Ladevorrichtung zur Verfügung stellend, zu präsentieren; wobei
das erste Endgerät (31) eine dritte Erfassungseinheit (306), die eine Ladezeit der Ladevorrichtung erfasst, und eine dritte Übertragungseinheit (306), die einen Ladestartbefehl an die Ladevorrichtung überträgt und dann einen Ladeendbefehl an die Ladevorrichtung überträgt, nachdem die Ladezeit verstrichen ist, einschließt; und
das erste Endgerät (31) eine erste Meldeeinheit (306), die die Übertragung des Ladeendbefehls meldet, einschließt.

**Revendications**

1.  Système d'utilisation de dispositif de charge (1) comprenant :

un serveur (4) ;

un premier terminal (31) appartenant à un utilisateur (10) d'un dispositif de charge et configuré pour être apte à communiquer avec le serveur (4) ; et

un second terminal (32) appartenant à une personne (20) prêtant un lieu d'installation du dispositif de charge et configuré pour être apte à communiquer avec le serveur (4), dans lequel :

le premier terminal (31) inclut une première unité d'acquisition (306) qui acquiert des informations d'identification du dispositif de charge lorsque le dispositif de charge est utilisé, et une première unité de transmission (306) qui transmet une demande d'utilisation du dispositif de charge et les informations d'identification ; et

le serveur (4) inclut une première unité de réception (43) qui reçoit la demande d'utilisation et les informations d'identification, une unité de calcul de prix revendiqué (43) qui calcule un prix revendiqué à l'utilisateur (10) lorsque la demande d'utilisation est reçue, une unité de présentation de prix revendiqué qui présente le prix revendiqué au premier terminal (31), une unité de calcul de prix de paiement (43) qui calcule un prix de paiement payé à une personne (20) prêtant le lieu d'installation lorsque la demande d'utilisation est reçue, et une unité de présentation de prix de paiement (43) qui présente le prix de paiement au second terminal (32) ; dans lequel

le premier terminal (31) inclut une troisième unité d'acquisition (306) qui acquiert un temps de charge du dispositif de charge, et une troisième unité de transmission (306) qui transmet une commande de début de charge au dispositif de charge et transmet ensuite une commande de fin de charge au dispositif de charge après que le temps de charge s'est écoulé ; et

le premier terminal (31) inclut une première unité de rapport (306) qui rapporte la transmission de la commande de fin de charge.

2. Système d'utilisation de dispositif de charge (1) selon la revendication 1, dans lequel :

le premier terminal (31) inclut une deuxième unité d'acquisition (306) qui acquiert des informations d'utilisation du dispositif de charge et une deuxième unité de transmission (306) qui transmet les informations d'utilisation ;

le serveur (4) inclut une seconde unité de réception (43) qui reçoit les informations d'utilisation ; et

l'unité de calcul de prix de paiement (43) calcule une facture d'électricité appliquée à l'utilisation du dispositif de charge sur la base des informations d'utilisation et inclut la facture d'électricité et des frais d'installation de dispositif de charge dans des frais de prix de paiement.

3. Système d'utilisation de dispositif de charge (1) selon la revendication 2, dans lequel :

le premier terminal (31) inclut une première unité d'entrée (303, 304) capable de sélectionner et d'entrer l'une d'une charge par temps, d'une charge par distance, et d'une charge complète, une deuxième unité d'entrée (303, 304) capable d'entrer un temps lors d'une charge par temps, et une troisième unité d'entrée (303, 304) capable d'entrer une distance lors d'une charge par distance ; et

la deuxième unité d'acquisition (306) acquiert des informations entrées par les première, deuxième, et troisième unités d'entrée ou des informations calculées à partir des informations entrées en tant qu'informations d'utilisation.

4. Système d'utilisation de dispositif de charge (1) selon l'une quelconque des revendications 1 à 3, dans lequel le serveur (4) inclut une quatrième unité d'acquisition (43) qui acquiert le temps de charge du dispositif de charge et un temps de transmission de la commande de début de charge par communication avec le premier terminal (31), une unité de gestion (43) qui gère une situation d'utilisation du dispositif de charge sur la base du temps de charge et du temps de transmission de la commande de début de charge acquis par la quatrième unité d'acquisition (43), et une unité de traitement de réservation (43) qui réalise un traitement de réservation du dispositif de charge disponible par communication avec le premier terminal (31).

5. Système d'utilisation de dispositif de charge (1) selon l'une quelconque des revendications 1 à 3, dans lequel :

le serveur (4) inclut une quatrième unité d'acquisition (43) qui acquiert un temps de charge du dispositif de charge et un temps de transmission de la commande de début de charge par communication avec le premier terminal (31), et une unité de gestion (43) qui gère une situation d'utilisation du dispositif de charge sur la base du temps de charge et du temps de transmission de la commande de début de charge acquis par la quatrième unité d'acquisition (43) ; et

le premier terminal (31) inclut une quatrième unité d'entrée (303, 304) capable d'entrer le dispositif de charge dont il est souhaité qu'une situation d'utilisation soit contrôlée, et une seconde unité de rapport (306) qui communique avec le serveur (4) et acquiert la situation d'utilisation du dispositif de charge entré par la quatrième unité d'entrée (303, 304).

6. Serveur (4) capable de communiquer avec un premier terminal (31) appartenant à un utilisateur (10) d'un dispositif de charge et un second terminal (32) appartenant à une personne (20) prêtant un lieu d'installation du dispositif de charge, le serveur (4) comprenant :

une première unité de réception (43) configurée pour recevoir une demande d'utilisation transmise depuis le premier terminal (31) et des informations d'identification du dispositif de charge ;
une unité de calcul de prix revendiqué (43) configurée pour calculer un prix revendiqué à l'utilisateur (10) lorsque la demande d'utilisation est reçue ;
une unité de présentation de prix revendiqué configurée pour présenter le prix revendiqué au premier terminal (31) ;
une unité de calcul de prix de paiement (43) configurée pour calculer un prix de paiement payé à une personne (20) prêtant le lieu d'installation lorsque la demande d'utilisation est reçue ; et
une unité de présentation de prix de paiement (43) configurée pour présenter le prix de paiement au second terminal (32) ; dans lequel
le premier terminal (31) inclut une troisième unité d'acquisition (306) qui acquiert un temps de charge du dispositif de charge, et une troisième unité de transmission (306) qui transmet une commande de début de charge au dispositif de charge et transmet ensuite une commande de fin de charge au dispositif de charge après que le temps de charge s'est écoulé ; et
le premier terminal (31) inclut une première unité de rapport (306) qui rapporte la transmission de la commande de fin de charge.

7. Programme pour un système d'utilisation de dispositif de charge (1) amenant un ordinateur à fonctionner comme :

une première unité de réception (43) configurée pour recevoir une demande d'utilisation et des informations d'identification d'un dispositif de charge transmises depuis un premier terminal (31) appartenant à un utilisateur (10) ;
une unité de calcul de prix revendiqué (43) configurée pour calculer un prix revendiqué à l'utilisateur (10) lorsque la demande d'utilisation est reçue ;
une unité de présentation de prix revendiqué configurée pour présenter le prix revendiqué au premier terminal (31) ;
une unité de calcul de prix de paiement (43) configurée pour calculer un prix de paiement payé à une personne (20) prêtant un lieu d'installation du dispositif de charge lorsque la demande d'utilisation est reçue ; et
une unité de présentation de prix de paiement (43) configurée pour présenter le prix de paiement à un second terminal (32) appartenant à la personne (20) prêtant le lieu d'installation du dispositif de charge ; dans lequel
le premier terminal (31) inclut une troisième unité d'acquisition (306) qui acquiert un temps de charge du dispositif de charge, et une troisième unité de transmission (306) qui transmet une commande de début de charge au dispositif de charge et transmet ensuite une commande de fin de charge au dispositif de charge après que le temps de charge s'est écoulé ; et
le premier terminal (31) inclut une première unité de rapport (306) qui rapporte la transmission de la commande de fin de charge.

# FIG. 1

1: CHARGER USING SYSTEM
2: CHARGER
4: SERVER
10: USER
20: OWNER (PERSON LENDING INSTALLATION PLACE OF CHARGER)
31: TERMINAL (FIRST TERMINAL)
32: TERMINAL (SECOND TERMINAL)

INTERNET COMMUNICATION NETWORK

EP 4 318 366 B1

## FIG. 2

306

| FIRST COMMUNI-CATION UNIT | 301 |
| SECOND COMMUNI-CATION UNIT | 302 |
| OPERATION UNIT | 303 |
| DISPLAY UNIT | 304 |
| SPEAKER | 305 |

31,32

μ COM

## FIG. 3

43

μ COM

SECOND COMMUNI-CATION UNIT    41

DB    42

4

## FIG. 4

| NO. | VEHICLE MODEL | BATTERY CAPACITY (kWh) | FULL-CHARGE TRAVELING DISTANCE (km) |
|---|---|---|---|
| 1 | A | XXX | XXX |
| 2 | B | XXX | XXX |
| 3 | C | XXX | XXX |
| 4 | D | XXX | XXX |
| | | | XXX |

## FIG. 5

| NO. | CHARGER | PERIOD OF TIME | COMMERCIAL POWER UNIT PRICE (YEN) | COST POWER UNIT PRICE (YEN) |
|---|---|---|---|---|
| 1 | AA | 21:00:00 TO 5:00:00 | XXX | XXX |
| 2 | AA | 5:00:00 TO 21:00:00 | XXX | XXX |
| 3 | BB | 1:00:00 TO 9:00:00 | XXX | XXX |
| 4 | BB | 9:00:00 TO 1:00:00 | XXX | XXX |

EP 4 318 366 B1

## FIG. 6

```
              ( USING PROCESS )
                      │
S1    ┌───────────────────────────┐
      │ ACQUIRE ID AND OUTPUT      │
      │ POWER OF CHARGER           │
      └───────────────────────────┘
                      │
S2    ┌───────────────────────────┐
      │ DISPLAY INPUT SCREEN OF USE│
      │ INFORMATION                │
      └───────────────────────────┘
                      │
S3    ┌───────────────────────────┐
      │ ACQUIRE BATTERY CAPACITY   │
      │ AND FULL CHARGE TRAVELABLE │
      │ DISTANCE                   │
      └───────────────────────────┘
                      │
S4    ┌───────────────────────────┐
      │ CALCULATE AND DISPLAY      │
      │ ASSUMED DISTANCE AND       │
      │ CHARGE TIME                │
      └───────────────────────────┘
                      │
            NO ┌─────< DETERMINED? >  S5
                      │ YES
S6    ┌───────────────────────────┐
      │ TRANSMIT USE REQUEST, ID,  │
      │ AND USE INFORMATION        │
      └───────────────────────────┘
                      │
            NO ┌─────< RECEIVED? >  S7
                      │ YES
S8    ┌───────────────────────────┐
      │ DISPLAY CLAIM FEE          │
      └───────────────────────────┘
                      │
            NO ┌─────< CONFIRMED? >  S9
                      │ YES
S10   ┌───────────────────────────┐
      │ TRANSMIT CONFIRMATION      │
      │ SIGNAL                     │
      └───────────────────────────┘

S11   ┌───────────────────────────┐
      │ TRANSMIT CHARGE START      │
      │ COMMAND                    │
      └───────────────────────────┘
                      │
S12   ┌───────────────────────────┐
      │ START COUNTING             │
      └───────────────────────────┘
                      │
            < IS IT CHARGE TIME? >──NO   S13
                      │ YES
S14   ┌───────────────────────────┐
      │ TRANSMIT CHARGE END        │
      │ COMMAND                    │
      └───────────────────────────┘
                      │
S15   ┌───────────────────────────┐
      │ REPORT CHARGE END          │
      └───────────────────────────┘
                      │
                  ( END )
```

# FIG. 7

C2

```
<INPUT SCREEN>

1. CHARGE BY TIME                    [INPUT]    TIME

                                     ⇒ CORRESPONDING TO
                                     ASSUMED DISTANCE OO km         — C3

2. CHARGE BY DISTANCE INPUT          [INPUT]    DISTANCE

                                     ⇒ ASSUMED CHARGE
                                     TIME O MINUTES

3. FULL CHARGE

                                     ⇒ ASSUMED CHARGE
                                     TIME O MINUTES

C1

              [INPUT]    IS TO BE SELECTED

                                                               B1

                    [DETERMINE]
```

# FIG. 8

USING PROCESS — S21

↓

CALCULATE CHARGE POWER AMOUNT — S22

↓

ACQUIRE COMMERCIAL POWER UNIT PRICE — S23

↓

CALCULATE CLAIM FEE — S24

↓

TRANSMIT CLAIM FEE — S25

↓

CONFIRMED? —NO

| YES

S26 — CLAIMING PROCESS

↓

S27 — ACQUIRE COST POWER UNIT PRICE

↓

S28 — CALCULATE ELECTRIC BILL

↓

END

# FIG. 9

RESERVATION PROCESS

S31

NO ← CONFIRMED?

YES

MANAGEMENT PROCESS — S32

S33

NO ← REQUEST FOR TRANSMITTING USE SITUATION?

YES

TRANSMIT USE SITUATION — S34

S35

IS RESERVATION REQUEST RECEIVED?

NO

YES

MAKE RESERVATION — S36

S37

TRANSMIT RESERVATION CONFIRMATION

# FIG. 10

```
        ( RESERVATION PROCESS )                S41

        ┌──────────────────────┐
        │ DISPLAY INPUT SCREEN OF │
        │   SEARCH CONDITION      │
        └──────────────────────┘              S42

        ┌──────────────────────┐
        │  TRANSMIT REQUEST FOR    │
        │ TRANSMITTING SEARCH     │
        │  CONDITION AND USE      │
        │      SITUATION          │
        └──────────────────────┘              S43

           ╱ IS USE SITUATION ╲  NO
           ╲   RECEIVED?      ╱──┐
                  │ YES                         S44
        ┌──────────────────────┐
        │   DISPLAY USE SITUATION │
        └──────────────────────┘              S45

        ┌──────────────────────┐
        │   TRANSMIT RESERVATION  │
        └──────────────────────┘              S46

           ╱ IS RESERVATION  ╲  NO
           ╲  CONFIRMATION    ╱──┐
             ╲  RECEIVED?   ╱
                  │ YES
              (  END  )
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018111494 A
- JP 2020170443 A
- JP 2020171172 A
- JP 2021055832 A